# EUROPÄISCHE PATENTSCHRIFT

(11) **EP 0 600 180 B1**
(45) Veröffentlichungstag und Bekanntmachung des Hinweises auf die Patenterteilung: **14.02.1996**
(21) Anmeldenummer: 93115806.7
(22) Anmeldetag: 30.09.1993
(51) Int. Cl.: G01M 1/06

(54) **Radauswuchtmaschine mit mechanischem Antrieb**
Wheel balancing machine with mechanical drive
Machine d'équilibrage de roues avec entraînement mécanique

(30) Priorität: 30.11.1992 DE 4240199
(43) Veröffentlichungstag der Anmeldung: 08.06.1994
(73) Patentinhaber: HOFMANN WERKSTATT-TECHNIK GMBH, D-64319 Pfungstadt (DE)
(72) Erfinder: Humber, Kurt, D-64347 Griesheim (DE); Moench, Uwe, D-64625 Bensheim (DE)
(74) Vertreter: Nöth, Heinz, Dipl.-Phys.

(56) Entgegenhaltungen:
- FR-A- 2 619 214
- GB-A- 2 153 095
- US-A- 4 489 607

## Beschreibung

Die Erfindung betrifft eine Radauswuchtmaschine nach dem Oberbegriff des Patentanspruches 1.

Aus der DE 40 28 335 A1 ist eine Radauswuchtmaschine bekannt, welche einen Handkurbelantrieb für eine Meßspindel hat, auf welcher das auszuwuchtende Rad aufgespannt wird. Mit Hilfe der Handkurbel wird die Meßspindel auf eine für die Auswuchtmessung erforderliche Meßdrehzahl gebracht. Die Unwuchtmessung erfolgt im Auslauf der Meßspindel.

Aufgabe der Erfindung ist es, eine Radauswuchtmaschine der eingangs genannten Art zu schaffen, bei welcher für den mechanischen Antrieb der Meßspindel ein geringer konstruktiver Aufwand erforderlich ist.

Diese Aufgabe wird erfindungsgemäß durch das Kennzeichen des Patentanspruches 1 gelöst.

Der Hebel kann einen Schmenkbereich haben der bevorzugt 90 bis 120° beträgt. Der Hebel kann in eine Radschutzhaube integriert sein, die während des Meßlaufs über das auszuwuchtende Rad geschwenkt ist. Die Schwenkbewegung, mit welcher nach dem Aufspannen des Kraftfahrzeugrades auf die Meßspindel die Radschutzhaube über das auszuwuchtende Rad geschwenkt wird, wird zur Erzeugung des Drehmoments ausgenützt, das für den Drehantrieb der Meßspindel auf diese übertragen wird. Zwischen einer Übertragungseinrichtung, welche die Übertragung des Drehmoments auf die Meßspindel ausführt, und zwischen der Meßspindel kann eine Kupplung angeordnet sein. Diese Kupplung kann als Schaltkupplung, z.B. als fremdbetätigte Kupplung oder als selbstschaltende Kupplung (Freilauf), ausgebildet sein. Beim Verschwenken des Hebels, der beispielsweise in die Radschutzhaube integriert sein kann, wird das dabei erzeugte Drehmoment mit Hilfe der Übertragungseinrichtung, welche beispielsweise als Ritzel-Zahnstange-Trieb ausgebildet sein kann, auf die Meßspindel übertragen. Im Falle einer fremdbetätigten Kupplung wird die Kupplung gelöst, oder im Falle einer selbstschaltenden Kupplung, beispielsweise eines Freilaufs, läuft die Meßspindel freidrehend weiter. Während dieses Auslaufs wird der Unwuchtmeßvorgang durchgeführt. Die Unwuchtmessung kann beispielsweise mit Hilfe von Kraftmeßwandlern, die kraftschlüssig mit der Meßspindel gekoppelt sind, durchgeführt werden. Die Meßwandler können an eine Auswerteeinrichtung, die nach dem Auto-Tracking-Meßverfahren oder mit digitaler Signalanalyse arbeitet (Hofmann news Nr. 5 "Meßverfahren und Meßgeräte der Hofmann-Auswuchtmaschinen", Impr. 09.85 D), angeschlossen sein.

Für die Unwuchtmessungen im Auslauf der Meßspindel genügen Meßdrehzahlen im Bereich von 30 bis 80 Umdrehungen pro Minute.

Als Bewegungsübertragungseinrichtung zwischen dem Hebel und der Meßspindel eignet sich auch eine Feder, die durch die Schwenkbewegung des Hebels, beispielsweise beim Schließen der Radschutzhaube, gespannt wird. Während der Federspannung wird mit Hilfe einer Verriegelungseinrichtung die Drehbewegung der Meßspindel angehalten. Die Verriegelungseinrichtung kann dann gelöst werden, so daß beim Entspannen der Feder ein Drehmoment zum Antrieb der Meßspindel erzeugt wird. Die Feder bildet im gespannten Zustand einen Kraftspeicher für den Antrieb der Meßspindel. Dieser Kraftspeicher wird geschaffen durch die Schwenkbewegung des Hebels.

Wenn der Hebel zusammen mit der Verschwenkung der Radschutzhaube aus der geöffneten Stellung in die das Rad abdeckende Schutzstellung mitverschwenkt wird, erreicht man einen Antrieb der Meßspindel durch Manipulationen, die ohnehin zur Vorbereitung des Unwuchtmeßvorgangs an der Radauswuchtmaschine durchgeführt werden müssen. Zusätzliche Betätigungen, wie sie bei einer Handkurbel beispielsweise erforderlich sind, können entfallen.

Die Entspannbewegung der den Kraftspeicher darstellenden Feder kann ebenfalls mit Hilfe einer Übertragungseinrichtung, die als Ritzel-Zahnstange-Trieb, Kettengetriebe oder Zugmittelgetriebe ausgebildet ist, übertragen werden. Für den Beginn des Meßvorgangs kann elektrisch oder mechanisch die Verriegelung der Meßspindel gelöst werden.

Anhand von Ausführungsbeispielen, die in den Figuren dargestellt sind, wird die Erfindung noch näher erläutert. Es zeigt:
- Figur 1:: in schematischer Darstellung eine Frontansicht eines Ausführungsbeispiels der Antriebseinrichtung;
- Figur 2:: eine Seitenansicht der in Figur 1 dargestellten Antriebseinrichtung;
- Figur 3:: einen Ritzel-Zahnstange-Trieb, welcher als Übertragungseinrichtung beim Ausführungsbeispiel der Figuren 1 und 2 zum Einsatz kommen kann;
- Figur 4:: ein weiteres Ausführungsbeispiel für eine Übertragungseinrichtung, welche eine spannbare Feder als Kraftspeicher für den Antrieb der Meßspindel aufweist und welche beim Ausführungsbeispiel der Figuren 1 und 2 zum Einsatz kommen kann; und
- Figur 5:: ein Ausführungsbeispiel für eine Kupplung zwischen der Übertragungseinrichtung und der Meßspindel, welche als Freilauf ausgebildet ist.

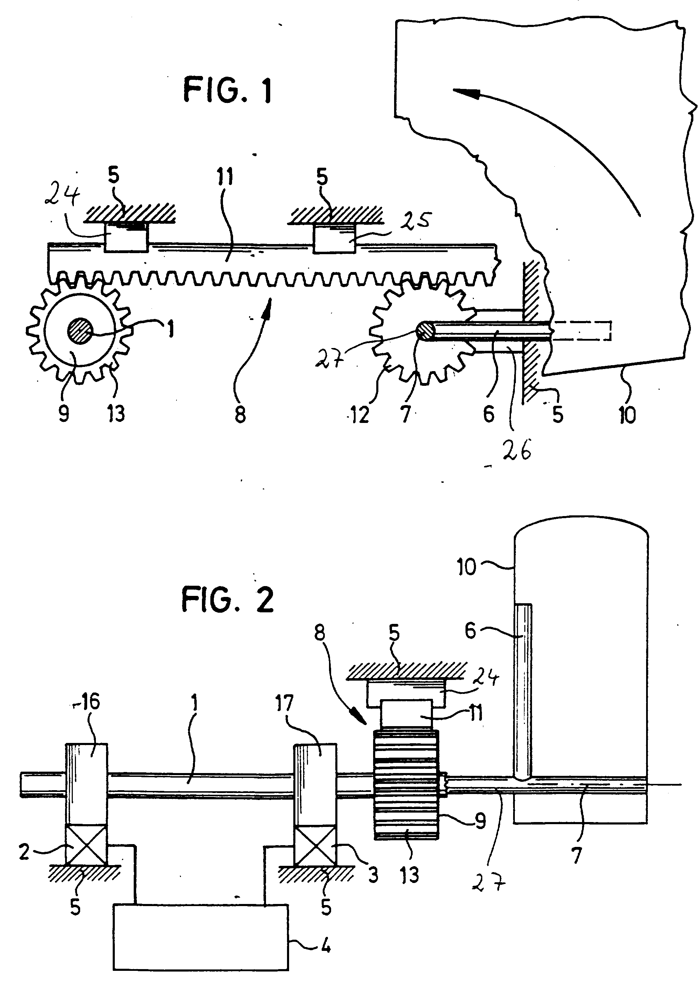

In den Figuren 1 und 2 ist eine Meßspindel 1 in einem schematisch dargestellten Maschinenrahmen 5 einer Radauswuchtmaschine gelagert. Die Lagerung erfolgt über als Wälzlager ausgebildete Drehlager 16, 17. Zwischen den Maschinenrahmen 5 und die Drehlager 16, 17 sind Kraftmeßwandler 2 und 3, die über die Drehlager kraftschlüssig mit der Meßspindel 1 verbunden sind, zwischengeschaltet. Mit den Kraftmeßwandlern 2 und 3 ist eine Auswerteeinrichtung 4 bekannter Ausführungsform angeschlossen.

Der Antrieb der Meßspindel 1 für den Unwuchtmeßlauf im Auslauf der Meßspindel erfolgt durch die Schwenkbewegung eines Hebels 6. Der Hebel 6 ist am Maschinenrahmen 5 schwenkbar um eine Achse 7 gelagert. Der Hebel 6 kann integraler Bestandteil einer Radschutzhaube 10 sein oder mit der Radschutzhaube 10 starr verbunden sein. Die Radschutzhaube 10 dient in bekannter Weise zur Abdeckung des Rades während der Raddrehung bzw. während dem Meßlauf. Beim dargestellten Ausführungsbeispiel ist der Hebel 6 zusammen mit der Radschutzhaube 10 um die gemeinsame Achse 7 schwenkbar am Maschinenrahmen 5 gelagert.

Der Hebel 6 ist mittels einer Übertragungseinrichtung 8, die ein bei der Hebelverschwenkung erzeugtes Drehmoment überträgt, mit der Meßspindel 1 verbunden. Das übertragene Drehmoment dient zum Antrieb der Meßspindel 1. Zwischen der Übertragungseinrichtung 8 und der Meßspindel 1 befindet sich eine Kupplung 9, die bei der Drehmomentübertragung in die Mespßindel 1 eingekoppelt ist und von der Meßspindel 1 zur Durchführung des Meßlaufs im Auslauf der Meßspindel 1 gelöst wird.

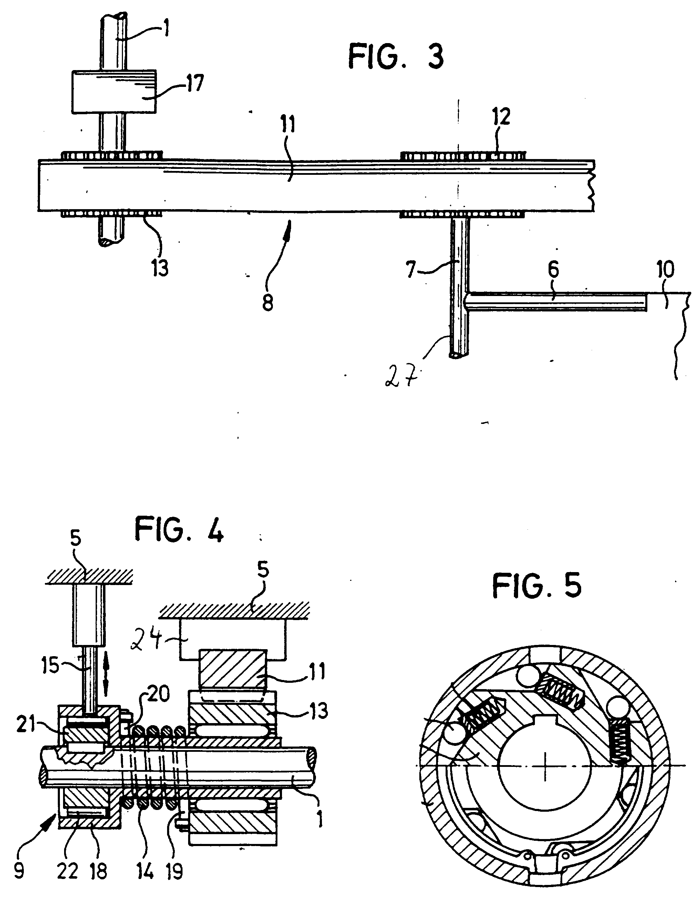

In der Figur 3 ist ein Ausführungsbeispiel der Übertragungseinrichtung 8 dargestellt. Diese besteht aus einem Ritzel-Zahnstange-Trieb. Ein erstes Ritzel 12 ist hierzu drehfest mit dem Hebel 6 verbunden. Das Ritzel 12 ist mit einem zweiten Ritzel 13 über eine Zahnstange 11 verbunden. Auf diese Weise wird das bei der Hebelschwenkung erzeugte Drehmoment vom Ritzel 12 auf das Ritzel 13 übertragen. Das Ritzel 13 ist über die Kupplung 9, welche, wie die Figur 5 zeigt, als richtungsgeschaltete Kupplung, insbesondere Freilauf, ausgebildet sein kann, mit der anzutreibenden Meßspindel 1 verbunden.

Die Drehmomentübertragung kann mit einer Übersetzung, insbesondere ins Schnelle, d.h. mit einem ersten Ritzel 12, das einen größeren Durchmesser als das Ritzel 13 hat, erfolgen. Wie schon erläutert ist das Ritzel 12 das treibende Ritzel und das Ritzel 13 das angetriebene Ritzel.

Bei dem in der Figur 4 dargestellten Ausführungsbeispiel ist zwischen dem von der Zahnstange 11 angetriebenen Ritzel 13 und einem Außenring 18 der Kupplung 9 eine Feder 14 angeordnet. Die Feder 14 ist beim dargestellten Ausführungsbeispiel als gewundene Schenkelfeder, die wie eine Rückzugsfeder wirkt, ausgebildet. Durch die Antriebsbewegung der Zahnstange 11 und die dabei erfolgende Drehung des Ritzels 13 wird die Feder 14 gespannt. Sie bildet in gespanntem Zustand einen Kraftspeicher. Ein Schenkel 19 der Feder 14 ist hierzu mit dem Ritzel 13 verbunden, und ein zweiter Schenkel 20 der Feder ist mit dem Außenring 18 der Kupplung 19 verbunden. Die Übertragung der Schwenkbewegung des Hebels 6 kann beim Ausführungsbeispiel der Figur 4 mit Übersetzung ins Langsame erfolgen. D.h. bei diesem Ausführungsbeispiel hat das mit dem Hebel 6 verbundene Ritzel 12 einen kleineren Durchmesser als das angetriebene Ritzel 13.

Die Meßspindel 1 ist, wie die Figuren 4 und 5 zeigen, mit einem Innenring 21 der Kupplung 9 drehfest verbunden. Zwischen dem Innenring 21 und dem Außenring 18 der Kupplung 9 sind in bekannter Weise federbelastete Klemmrollen 22 vorgesehen. Beim dargestellten Ausführungsbeispiel ist für jede Klemmrolle 22 eine Einzelanfederung 23 vorgesehen (Figur 5).

Während des Aufziehens bzw. Spannens der Feder 14 greift eine Verriegelungseinrichtung 15 am Außenring 18 der Kupplung 9 an. Es ist auch möglich, daß die Verriegelungseinrichtung 15 am Innenring 21 oder direkt an der Meßspindel 1 angreift. Die Verriegelungseinrichtung 15 kann manuell oder mit Hilfe eines Elektromagneten betätigt, d.h. gelöst oder in die Verriegelungsstellung gebracht werden.

Die Arbeitsweise der dargestellten Antriebseinrichtung ist folgende:

Nachdem ein nicht näher dargestelltes auszuwuchtendes Kraftfahrzeugrad auf die Meßspindel in bekannter Weise aufgespannt ist, wird die Radschutzhaube 10 aus der der in der Figur 1 dargestellten geöffneten Stellung nach links in die strichliert dargestellte Stellung, in welcher das auszuwuchtende Rad abgedeckt wird, verschwenkt. Der Schwenkwinkel beträgt beim dargestellten Ausführungsbeispiel ca. 90°. Bei dieser Schwenkbewegung um die Achse 7 wird der Hebel 6 ebenfalls um die Achse 7 mitverschwenkt. Über das antreibende Ritzel 12 und die Zahnstange 11 wird beim Ausführungsbeispiel der Figur 3 das Drehmoment auf das zweite Ritzel 13 übertragen. Das zweite Ritzel 13 ist drehfest mit dem Außenring 18 verbunden, so daß die Meßspindel 1 bereits während des Schließens der Radschutzhaube 10 angetrieben wird, wobei, wie schon erläutert, die Drehmomentübertragung vom Hebel 6 auf die Meßspindel 1 mit Übersetzung ins Schnelle erfolgen kann. Bei geschlossener Radschutzhaube 10 wird das mit dem Außenring 18 drehfest verbundene Ritzel 13 nicht mehr angetrieben und steht still. Die richtungsgeschaltete Kupplung 9 (Figur 5), welche als Freilauf wirkt, bewirkt, daß bei stillstehendem Außenring 18 der Innenring 21 und die drehfest damit verbundene Meßspindel 1, insbesondere aufgrund der trägen Masse des auf die Meßspindel 1 aufgespannten Rades frei weiterdreht. Bei diesem freien Drehen bzw. diesem Auslauf der Meßspindel 1 wird die Unwuchtmessung in bekannter Weise durchgeführt.

Bei dem in der Figur 4 dargestellten Ausführungsbeispiel ist, wie schon erläutert, das angetriebene Ritzel 13 vom Außenring 18 der Kupplung 9 getrennt, und zwischen dem Außenring 18 und dem Ritzel 13 ist die Feder 14 angeordnet. Während des Antriebs des Ritzels 13 bei der Schwenkbewegung der Radschutzhaube aus der geöffneten Stellung in die schützende Stellung wird die Feder 14 gespannt, da die Verriegelungseinrichtung 15 in den Außenring 18 der Kupplung 9 eingreift und somit eine Übertragung des Drehmoments auf die Meßspindel 1 blockiert ist. Wenn die Radschutzhaube 10 geschlossen ist, wird die Verriegelungseinrichtung 15 gelöst, so daß die in der Feder 14 gespeicherte Kraft auf den Außenring 18 und von dort über die Klemmrollen 22 und den Innenring 21 auf die Meßspindel 1 übertragen wird. Nach vollständiger Entspannung der Feder 14 steht der Außenring 18 still, und die Klemmrollen 22 kommen in bekannter Weise außer Klemmeingriff mit dem Innenring 21, so daß die Meßspindel 1, wie schon erläutert, frei weiterdrehen kann. Während dieses Auslaufs erfolgt die Unwuchtmessung.

Anstelle der dargestellten Schenkelfeder kann auch eine Spiralfeder oder auch eine Schraubenzug- oder Schraubendruckfeder zum Einsatz kommen. Wenn eine Schraubenzug- oder Schraubendruckfeder zum Einsatz kommt, erfolgt das Spannen der Feder in Bewegungsrichtung der Zahnstange 11.

## Patentansprüche

1. Radauswuchtmaschine mit einem mechanischen Antrieb einer Meßspindel, auf welcher ein auszuwuchtendes Rad aufgespannt ist,und einer von Hand zu betätigenden Betätigungseinrichtung zur Erzeugung eines auf die Meßspindel für deren Antrieb zu übertragenden Drehmoments,
dadurch **gekennzeichnet**
daß die Betätigungseinrichtung als Hebel (6) ausgebildet ist, der einen Schwenkbereich hat, der kleiner als 180° ist.

2. Radauswuchtmaschine nach Anspruch 1, dadurch gekennzeichnet, daß zwischen Hebel (6) und Meßspindel (1) eine Bewegungsübertragungseinrichtung (8), welche die Schwenkbewegung des Hebels (6) als Drehantriebsbewegung auf die Meßspindel (1) überträgt, und eine lösbare Kupplungseinrichtung (9) geschaltet sind.

3. Radauswuchtmaschine nach Anspruch 1 oder 2, dadurch gekennzeichnet, daß die Bewegungsübenragungseinrichtung (8) ein Ritzel-Zahnstange-Trieb (11-13) ist, wobei ein erstes Ritzel (12) mit dem Hebel (6) gekoppelt ist und ein zweites Ritzel (13) mit der einen Kupplungsseite verbunden ist.

4. Radauswuchtmaschine nach Anspruch 1 oder 2, dadurch gekennzeichnet, daß die Bewegungsübertragungseinrichtung (8) eine durch die Schwenkbewegung des Hebels (6) spannbare Feder (14) ist und daß ferner eine während der Federspannung wirkende Verriegelungseinrichtung (15), welche eine Drehbewegung der Meßspindel anhält, vorgesehen ist.

## Revendications

1. Machine d'équilibrage de roue comportant un dispositif d'entraînement mécanique d'une broche de mesure, sur lequel est bloquée une roue devant être équilibrée, et un dispositif d'actionnement destiné à être actionné manuellement et servant à produire un couple devant être transmis à la broche de mesure pour son entraînement,
caractérisée par le fait
que le dispositif d'actionnement est agencé sous la forme d'un levier (6), qui a une plage de basculement qui est inférieure à 180°.

2. Machine d'équilibrage de roue suivant la revendication 1, caractérisée par le fait qu'entre le levier (6) et la broche de mesure (1) sont montés un dispositif de transmission de déplacement (8), qui transmet le couple de basculement du levier (6) en tant que déplacement d'entraînement en rotation à la broche de mesure (6), et un dispositif coupleur desserrable (9).

3. Machine d'équilibrage de roue suivant la revendication 1 ou 2, caractérisée par le fait que le dispositif de transmission de déplacement (8) est un dispositif d'entraînement à pignon et à crémaillère (11 à 13), un premier pignon (12) étant accouplé au levier (6), tandis qu'un second pignon (13) est relié à un côté d'accouplement.

4. Machine d'équilibrage de roue suivant la revendication 1 ou 2, caractérisée par le fait que le dispositif de transmission de déplacement (8) est un ressort (14), qui peut être bandé sous l'effet du mouvement de basculement du levier (6) et qu'il est en outre prévu un dispositif de verrouillage (15), qui agit pendant le bandage du ressort et qui bloque un mouvement de rotation de la broche de mesure.

## Claims

1. A wheel balancing machine having a mechanical drive for a measuring spindle on which a wheel to be balanced is clamped, and an actuating means which is to be actuated by hand for the production of a torque to be transmitted to the measuring spindle for the drive thereof, characterised in that the actuating means is in the form of a lever (6) which has a pivotal range which is less than 180°.

2. A wheel balancing machine according to claim 1 characterised in that connected between the lever (6) and the measuring spindle (1) are a motion transmission means (8) which transmits the pivotal movement of the lever (6) as a rotary drive movement to the measuring spindle (1), and a releasable coupling means (9).

3. A wheel balancing machine according to claim 1 or claim 2 characterised in that the motion transmission means (8) is a rack-and-pinion transmission (11-13), wherein a first pinion (12) is coupled to the lever (6) and a second pinion (13) is connected to one side of the coupling means.

4. A wheel balancing machine according to claim 1 or claim 2 characterised in that the motion transmission means (8) is a spring (14) which can be stressed by the pivotal movement of the lever (6) and that there is also provided a locking means (15) which acts during stressing of the spring and which stops a rotary movement of the measuring spindle.
